# EUROPEAN PATENT APPLICATION

(11) **EP 4 195 764 A1**
(43) Date of publication of application: **14.06.2023**
(21) Application number: 20948329.6
(22) Date of filing: 05.08.2020
(51) Int. Cl.: H04W 36/00

(54) **CELL SELECTION METHOD AND APPARATUS, DEVICE AND MEDIUM**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN); HU, Yi, Dongguan, Guangdong 523860 (CN); LI, Haitao, Dongguan, Guangdong 523860 (CN)
(74) Representative: Taor, Simon Edward William
(86) International application number: PCT/CN2020/107178
(87) International publication number: WO 2022/027344

(57) **Abstract**

Disclosed in the present application are a cell selection method and apparatus, a device and a storage medium, relating to the field of communications. The method comprises: in an NTN scenario, a terminal performing cell selection according to first information, the first information comprising at least one of the following: location information of the terminal; the type of a satellite; a deployment scenario of the satellite; and a cell type of the satellite.

## Description

### TECHNICAL FIELD

The present disclosure relates to the field of mobile communication, and in particular to a cell selection method, apparatus, device and medium.

### BACKGROUND

Cell selection refers to a process in which a user equipment (User Equipment, UE) in an idle state selects a cell with better signal quality to provide a service signal.

In a cellular communication system, there is a large difference in channel quality between the center of the cell and the edge of the cell. The UE monitors the channel quality of the current cell and neighboring cells to select a cell with better channel quality to provide service signals.

However, in a non-terrestrial communication network (Non Terrestrial Network, NTN), the channel quality difference between the cell center and the cell edge of the satellite coverage cell is small, and it is difficult to select a cell according to the channel quality.

### SUMMARY

Embodiments of the present application provide a cell selection method, apparatus, device, and storage medium. The technical scheme is as follows.

According to one aspect of the present application, a cell selection method is provided, the method including:
performing cell selection according to first information, wherein the first information includes at least one of the following information:
location information of a terminal;
a type of a satellite;
a deployment scenario of the satellite; and
a cell type of the satellite.

According to one aspect of the present application, an apparatus for cell selection is provided, the apparatus including:
a selecting module, configured to perform cell selection according to first information, wherein the first information includes at least one of the following information:
location information of a terminal;
a type of a satellite;
a deployment scenario of the satellite; and
a cell type of the satellite.

According to one aspect of the present application, a terminal is provided, and the terminal includes: a processor; a transceiver connected to the processor; and a memory for storing executable instructions of the processor; wherein, the processor is configured to load and execute the executable instructions to implement the cell selection method as described in the above aspect.

According to one aspect of the present application, a computer-readable storage medium is provided, wherein executable instructions are stored in the readable storage medium, and the executable instructions are loaded and executed by a processor to implement the cell selection method as described in the above aspect.

According to one aspect of the present application, a computer program product is provided, wherein executable instructions are stored in the readable storage medium, and the executable instructions are loaded and executed by a processor to implement the cell selection method as described in the above aspect.

According to one aspect of the present application, a chip is provided, and the chip is used to implement the method for selecting a cell as described in the above aspect.

The technical solutions provided by the embodiments of the present application at least include the following beneficial effects:
By using non-channel quality information such as terminal location information, satellite type, satellite deployment scenario, and satellite cell type to perform cell selection, it can solve the problem that a reasonable cell cannot be selected based on channel quality in NTN scenarios.

### BRIEF DESCRIPTION OF THE DRAWINGS

In order to more clearly illustrate the technical solutions in the embodiments of the present application, the drawings that need to be used in the description of the embodiments will be briefly introduced below. Obviously, the drawings in the following description are only some embodiments of the present application. For those skilled in the art, other drawings can also be obtained based on these drawings without creative effort.
FIG. 1 is a network architecture diagram of a transparent payload NTN provided by an exemplary embodiment of the present application;
FIG. 2 is a network architecture diagram of a regenerative payload NTN provided by an exemplary embodiment of the present application;
FIG. 3 is a flowchart of a cell selection method provided by an exemplary embodiment of the present application;
FIG. 4 is a flowchart of a cell selection method provided by an exemplary embodiment of the present application;
FIG. 5 is a flowchart of a cell selection method provided by an exemplary embodiment of the present application;
FIG. 6 is a flowchart of a cell selection method provided by an exemplary embodiment of the present application;
FIG. 7 is a schematic diagram of a mobile cell type provided by an exemplary embodiment of the present application;
FIG. 8 is a schematic diagram of a mobile cell type provided by an exemplary embodiment of the present application;
FIG. 9 is a flowchart of a cell selection method provided by an exemplary embodiment of the present application;
FIG. 10 is a flowchart of a cell selection method provided by an exemplary embodiment of the present application;
FIG. 11 is a flowchart of a cell selection method provided by an exemplary embodiment of the present application;
FIG. 12 is a flowchart of a cell selection method provided by an exemplary embodiment of the present application;
FIG. 13 is a flowchart of a cell selection method provided by an exemplary embodiment of the present application;
FIG. 14 is a block diagram of a cell selection apparatus provided by an exemplary embodiment of the present application; and
FIG. 15 is a schematic structural diagram of a communication device provided by an exemplary embodiment of the present application.

### DETAILED DESCRIPTION

In order to make the purpose, technical solution and advantages of the present application clearer, the implementation manners of the present application will be further described in detail below in conjunction with the accompanying drawings.

Currently, the Third Generation Partnership Project (3GPP) is researching the NTN technology, and the NTN technology generally provides communication services to ground users in the form of satellite communication. Compared with terrestrial cellular network communication, satellite communication has many unique advantages. First of all, satellite communication is not restricted by the user's region. For example, general land communication cannot cover areas such as oceans, mountains, deserts, etc. that cannot be equipped with communication equipment or are not covered by communication due to sparse population. For satellite communication, since one satellite can cover a large area of the ground, and the satellite can orbit the earth, so theoretically every corner of the earth can be covered by satellite communications. Secondly, satellite communication has great social value. Satellite communication can be covered at a lower cost in remote mountainous areas, poor and backward countries or regions, so that people in these regions can enjoy advanced voice communication and mobile Internet technology, which is conducive to narrowing the digital gap with developed regions and promoting development of these areas. Thirdly, the distance of satellite communication is long, and the cost of communication does not increase significantly with the increase of communication distance. Finally, the stability of satellite communication is high, and it is not limited by natural disasters.

Communication satellites are classified into Low-Earth Orbit (LEO) satellites, Medium-Earth Orbit (MEO) satellites, Geostationary Earth Orbit (GEO) satellites, and High Elliptical Orbit (HEO)satellites and the like according to their orbital heights. At present, LEO and GEO are mainly studied.

### 1. LEO

The altitude range of low-orbit satellites is 500km~1500km, and the corresponding orbital period is about 1.5 hours to 2 hours. The signal propagation delay of single-hop communication between users is generally less than 20ms. The maximum satellite visible time is 20 minutes. The signal propagation distance is short, the link loss is small, and the requirements for the transmission power of the user terminal are not high.

### 2. GEO

Satellites in geosynchronous orbit have an orbital height of 35786km and a rotation period around the earth of 24 hours. The signal propagation delay of single-hop communication between users is generally 250ms.

In order to ensure satellite coverage and improve the system capacity of the entire satellite communication system, satellites use multi-beams to cover the ground. A satellite can form dozens or even hundreds of beams to cover the ground; a satellite beam can cover a ground area with tens to hundreds of kilometers in diameter.

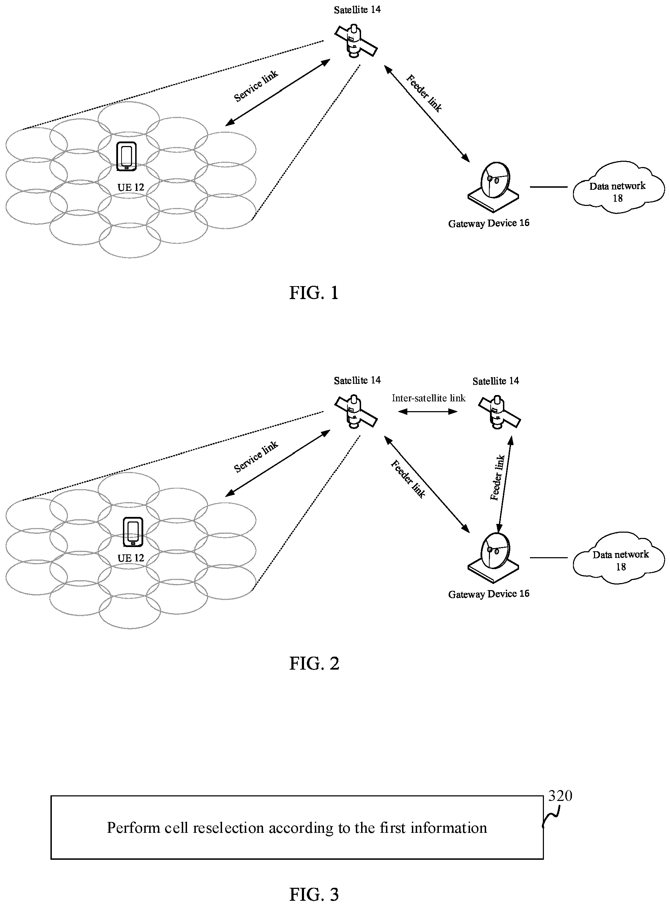

There are at least two NTN scenarios: transparent payload NTN and regenerative payload NTN. FIG. 1 shows the scenario of transparent payload NTN, and FIG. 2 shows the scenario of regenerative payload NTN.

The NTN network consists of the following network elements:
· one or more gateways, used to connect satellites and terrestrial public networks.
·Feeder link: a link used for communication between the gateway and the satellite.
· Service link: a link used for communication between the terminal and the satellite.
. Satellite: from the functions it provides, it can be classified into two types: transparent payload and regenerative payload.
·Transparent payload: only provide wireless frequency filtering, frequency conversion and amplification functions. Only provide transparent forwarding of signals, and will not change the waveform signal it forwards.
Regenerative payload: in addition to providing radio frequency filtering, frequency conversion and amplification functions, it can also provide demodulation/decoding, routing/conversion, encoding/modulation functions. It has part or all of the functions of a base station.

Inter-satellite link (ISL): exists in regenerative payload scenarios.

FIG. 3 shows a flowchart of a cell selection method provided by an exemplary embodiment of the present application. In this embodiment, the method is executed by a terminal as an example. The method includes the following.

Step 320: Perform cell selection according to the first information.

Schematically, in the NTN scenario, the terminal selects a cell according to the first information, and the first information includes but not limited to: at least one kind of information different from the channel quality of the cell. The channel quality of a cell can also be understood as the signal quality of a cell.

In an example, cell selection includes: at least one of cell primary selection and cell reselection. This application uses cell reselection as an example for illustration, but it is not limited thereto.

In an example, the first information includes at least one of the following information.

The location information of the terminal;

The location information of the terminal is determined according to at least one of the following second information: the distance between the terminal and the satellite; the distance between the terminal and the reference point of the cell; the (Global Positioning System, GPS) location information of the terminal; Timing Advance (TA) of the terminal; the round-trip time (Round-TripTime, RTT) between the terminal and the satellite; the propagation delay between the terminal and the satellite; the cell (CELL ID) in which the terminal currently resides; synchronization signal block index (SSB index) corresponding to the terminal; satellite beam index (satellite beam index) where the terminal resides; bandwidth part identification (BWP ID) activated by the terminal.

The RTT and the propagation delay can be calculated by using the distance between the terminal and the satellite. The real-time position of the satellite can be calculated using the ephemeris information of the satellite. The location information of the terminal may be relatively precise location information or relatively rough location information.

The type of satellite;

The type of satellite includes at least one of the following types: LEO satellite; MEO satellite; GEO satellite; unmanned aerial vehicle platform (UAS Platform) satellite; HEO satellite.

Satellite deployment scenario;

The deployment scenario of the satellite includes at least one of the following: a transparent payload scenario and a regenerative payload scenario.

The cell type of the satellite;

The satellite cells include at least one of the following: fixed cells (fixed cell); moving cell (moving cell).

In an example, on the basis of the foregoing first information, the first information further includes: channel quality of the cell. The channel quality of the cell includes: the first channel quality of the current cell, and/or the second channel quality of the neighboring cell. Optionally, the channel quality is represented by reference signal received power (RSRP), and cell selection is performed based on the S criterion for cell selection/reselection.

In an example, all or part of the above first information is broadcasted by the network device through the system information (SI).

To sum up, in the method provided in this embodiment, by using non-channel quality information such as terminal location information, satellite type, satellite deployment scenario, and satellite cell type to perform cell selection, it can solve the problem that in NTN scenarios, cell selection cannot be performed reasonably based on only channel quality.

In an optional embodiment based on FIG. 3, when the first information includes two kinds of information, different types of first information have respective priorities. The terminal preferentially performs cell selection according to the high-priority first information. When the first information with high priority fails to select the target cell, the first information with the second highest priority is further used to select the cell. The embodiment of the present application does not limit the order of priorities among different types of first information. In one example, the priority of the channel quality of the cell>the type of the satellite>the cell type of the satellite; in another example, the priority of the channel quality of the cell>the location information of the terminal>the type of the satellite; in another example, the deployment scenario of the satellite>the cell type of the satellite > the priority of the channel quality of the cell.

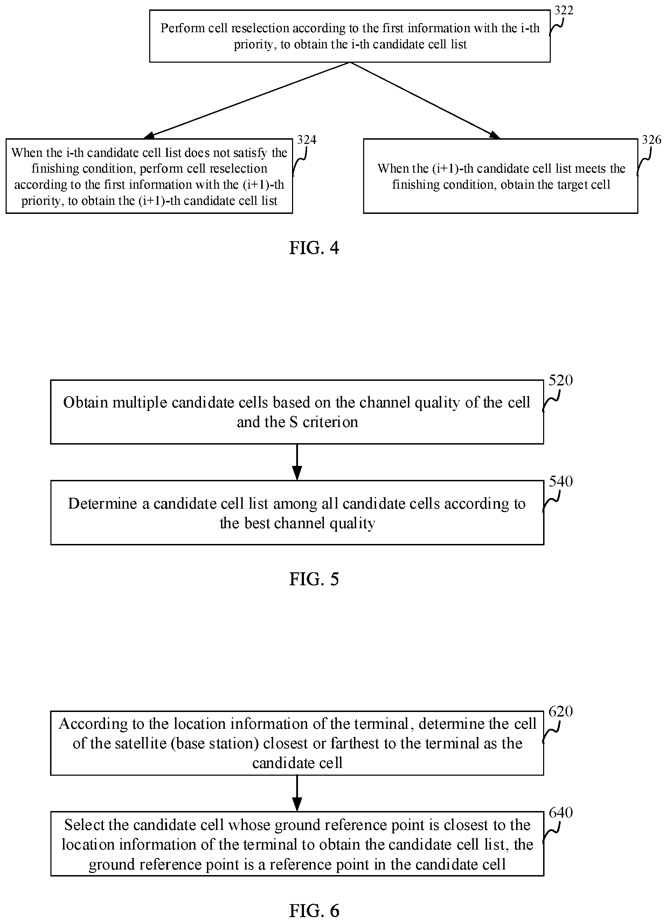

Step 320 may optionally include the following steps, as shown in FIG. 4.

Step 322: Perform cell selection according to the first information with the i-th priority, to obtain the i-th candidate cell list.

Take the first information including: information A, information B and information C as an example. Information A, information B, and information C are each one of the above-mentioned multiple types of first information. Assume that information A corresponds to the first priority, information B corresponds to the second priority, and information C corresponds to the third priority.

The terminal performs cell selection according to the information A with the first priority, and obtains a first candidate cell list. Wherein, the initial value of i is 1 or 0, and this embodiment uses the initial value of i as 1 for illustration.

Step 324: When the i-th candidate cell list does not satisfy the finishing condition, perform cell selection according to the first information with the (i+1)-th priority, to obtain the (i+1)-th candidate cell list.

Exemplarily, the finishing condition includes: the number of cells in the current candidate cell list is 1.

When the first candidate cell list does not satisfy the finishing condition, the terminal performs cell selection according to the information B with the second priority to obtain the second candidate cell list. When the second candidate cell list does not satisfy the finishing condition, the terminal performs cell selection according to the information B with the third priority to obtain the second candidate cell list.

The i-th priority is higher than the (i+1)-th priority, and the (i+1)-th candidate cell list is a subset of the i-th candidate cell list. Alternatively, the (i+1)-th candidate cell list is a list selected from the i-th candidate cell list according to the first information of the (i+1)-th priority.

Step 326: When the (i+1)-th candidate cell list meets the finishing condition, obtain the target cell.

When the number of cell(s) in the (i+1)-th candidate cell list is 1, the target cell is obtained.

When the number of cells in the (i+1)-th candidate cell list is greater than 1, reexecute the above process after waiting for a predetermined period of time, or select the candidate cell with the best channel quality in the (i+1)-th candidate cell list as the target cell.

To sum up, the method provided in this embodiment performs cell selection using various first information by combining priorities, thereby ensuring the reliability of cell selection and avoiding useless ping-pong effects.

For the case where the first information includes: the channel quality of the cell:

In the embodiment based on the illustration of FIG. 3, as shown in FIG. 5, the first information includes the channel quality of the cell, and the terminal performs cell selection according to the channel quality of the cell to obtain a candidate cell list, includes the following.

Step 520: Obtain multiple candidate cells based on the channel quality of the cell and the S criterion.

After the UE camps on successfully, it will continue to measure the current cell. The RRC layer calculates Srxlev (S criterion) based on the RSRP measurement result, and compares it with Sintrasearch (intra-frequency measurement start threshold) and Snonintrasearch (inter-frequency/inter-system measurement start threshold), as a judgment condition for starting adjacent cell measurement.

Step 540: Determine a candidate cell list among all candidate cells according to the best channel quality.

The quality difference between the channel quality of each candidate cell in the candidate cell list and the best channel quality is smaller than the threshold rangeToBestCell.

In the embodiment shown in FIG. 4, the first information includes channel quality, and the terminal performing cell selection according to the channel quality with i-th priority to obtain the i-th candidate cell list, includes the following.

When i = 1, the terminal obtains multiple candidate cells based on channel quality and S criterion. According to the best channel quality, a first candidate cell list is determined among all candidate cells. The quality difference between the channel quality of each candidate cell in the first candidate cell list and the best channel quality is smaller than the threshold rangeToBestCell (that is, the R criterion).

When i is greater than 1, the terminal obtains multiple candidate cells based on the channel quality of the cell and the S criterion. The first candidate cell list is determined by sorting the top n candidate cells according to the channel quality from high to low. Alternatively, the first candidate cell list is determined according to the candidate cells whose channel quality is greater than a quality threshold.

Optionally, the number n is predefined or preconfigured, and the quality threshold is predefined or preconfigured. The "predefined" refers to defining in advance according to the communication protocol, and the "preconfigured" refers to the network device configuring it to the terminal through system broadcast or proprietary signaling or other signaling in advance.

For the case where the first information includes: location information of the terminal:
In the embodiment based on the illustration of FIG. 3 or FIG. 4, as shown in FIG. 6, the first information includes the location information of the terminal. The terminal performing cell selection according to the location information of the terminal to obtain a candidate cell list; or the terminal performing cell selection according to the location information of the terminal with i-th priority to obtain the i-th candidate cell list, includes the following.

Step 620: According to the location information of the terminal, determine the cell of the satellite (base station) closest or farthest to the terminal as the candidate cell.

Optionally, the distance of the satellite is calculated according to the ephemeris information of the satellite.

In an example, according to the location information of the terminal, the cell of at least one satellite with the closest distance to the terminal is determined as the candidate cell.

The closest at least one satellite includes: the nearest satellite, a plurality of nearest satellites with equal distances, and at least one of n satellites sorted according to distance from near to far.

In an example, according to the location information of the terminal, the cell of at least one satellite that is farthest from the terminal is determined as the candidate cell. For example, in the case where the UE tends to select the GEO satellite.

The farthest at least one satellite includes: the farthest satellite, a plurality of furthest satellites with equal distances, and at least one of the n satellites sorted according to distance from far to near.

Step 640: Select the candidate cell whose ground reference point is closest to the location information of the terminal to obtain the candidate cell list. Wherein, the ground reference point is a reference point in the candidate cell, and n is a positive integer.

To sum up, in this embodiment, if the ground reference point is the location of the center of the cell, the selection of the cell closest to the ground reference point by the UE means that the UE is located in the center of the cell, and the time that the cell can provide services for the UE is relatively longer, thereby avoiding additional mobility (handover/BWP handover/beam handover, etc.).

For the case where the first information includes: satellite type:
In the embodiment based on the illustration of FIG. 3 or FIG. 4, the first information includes the satellite type, and the terminal performing cell selection according to the satellite type to obtain a candidate cell list; or, the terminal performing cell selection according to the satellite type with i-th priority, to obtain the i-th candidate cell list, includes the following.

In one implementation possibility: the UE preferentially selects satellites of the LEO type.

LEO satellites are characterized by a shorter distance from the ground, short propagation delay, and less path loss, but LEO satellites are not synchronized with the rotation of the earth, and the satellites are always moving /changing, which will bring additional mobility.

In one implementation possibility: the UE preferentially selects satellites of the GEO type.

GEO satellites are synchronous with the rotation of the earth. Although they are far from the ground, they can guarantee a longer service time and have less mobility.

To sum up, in this embodiment, the UE preferably selects a certain type of satellite according to its own needs for at least one factor such as propagation delay, path loss, and mobility, so as to obtain communication services that better satisfy its own needs.

For the case that the first information includes: the satellite deployment scenario:
In the embodiment based on the illustration of FIG. 3 or FIG. 4, the first information includes the satellite deployment scenario, and the terminal performing cell selection according to the satellite deployment scenario to obtain a candidate cell list; or, the terminal performing cell selection according to the i-th priority satellite deployment scenario, to obtain the i-th candidate cell list, includes the following.

In one implementation possibility: the UE preferentially selects the satellite deployed with transparent payload.

Satellites deployed with transparent payloads only provide the functions of radio frequency filtering, frequency conversion and amplification. They only provide transparent forwarding of signals, and will not change the waveform signals they forward. That is to say, the UE is connected to the base station on the ground through the satellite deployed with transparent transmission payload. Although the transmission time is relatively long if the UE selects the satellite deployed with transparent transmission payload (the propagation delay between the UE and the satellite + the propagation delay between the satellite and the base station), but when the satellite (such as LEO) moves, the base station on the ground does not change, and the configuration of the UE remains unchanged.

In one implementation possibility: the UE preferentially selects satellites deployed with regenerative payload.

In addition to the functions of radio frequency filtering, frequency conversion and amplification, satellites deployed with regenerative payloads can also provide functions of demodulation/decoding, routing/conversion, and encoding/modulation. Satellites deployed with regenerative payloads have some or all of the functions of base stations. The transmission delay may be reduced when the UE selects satellites deployed with regenerative payloads.

To sum up, in this embodiment, according to the UE's requirements for at least one factor such as transmission delay, path loss, and mobility, the UE preferably selects a satellite in a certain satellite deployment scenario, and can obtain the communication service that better meets its own needs.

For the case where the first information includes: cell type:
In the embodiment based on the illustration of FIG. 3 or FIG. 4, the first information includes the cell type, and the terminal performing cell selection according to the cell type to obtain a candidate cell list; or, the terminal performing cell selection according to the cell type with the i-th priority, to obtain the i-th candidate cell list, includes the following.

In one implementation possibility: the UE preferentially selects a satellite of a fixed cell type.

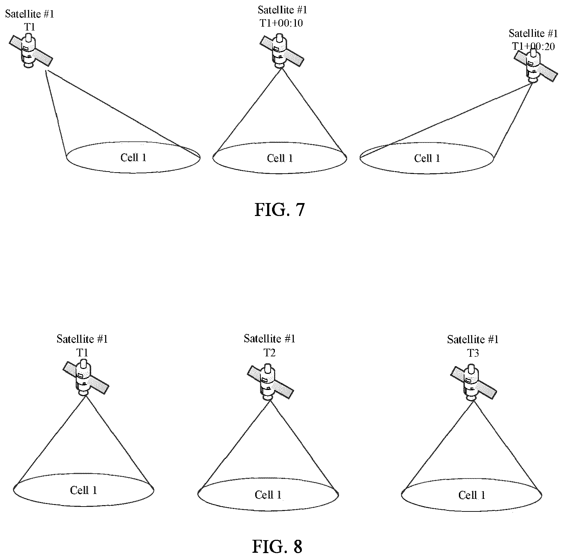

The cell coverage of fixed cell type satellites on the ground is fixed and will not change with the movement of the satellite. As shown in FIG. 7, the ground cell of satellite # 1 at time T1, the ground cell at time T1 + 00: 10, and the ground cell at time T1 + 00: 20 are all fixed.

In one implementation possibility: the UE preferentially selects the satellite of a mobile cell type.

The cell coverage of mobile cell-type satellites on the ground changes as the satellite moves. As shown in FIG. 8, satellite # 1 is located right above the coverage of the cell, and the location of the cell is always changing during the movement of the satellite (such as time T1, T2, T3).

To sum up, in this embodiment, the UE can avoid frequent mobility according to the satellite of the fixed cell type; and the UE can obtain shorter transmission delay according to the satellite of the mobile cell type.

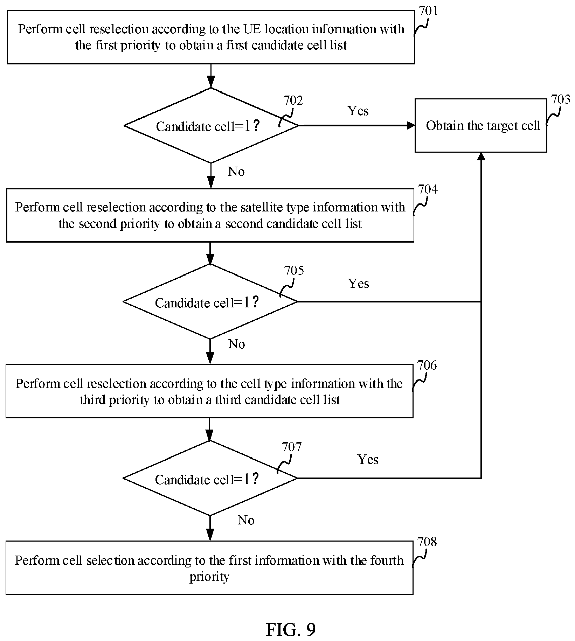

In an example based on FIG. 4, the network device configures the following cell selection criteria and priorities for the terminal:
First priority: Determine the candidate cell (list) based on the UE location information.
Second priority: Determine the candidate cell (list) based on the satellite type.
Third priority: Determine the candidate cell (list) based on the cell type. As shown in FIG. 9, the terminal performs the following steps:
   Step 701: Determine a first candidate cell list according to the UE location information with the first priority.

UE determines at least one candidate cell based on the location information of the UE with the first priority. Further, the network device uses the system information to broadcast the location of the cell reference point of each cell, that is, the location information of the center of the cell, which may specifically be coordinates, which is not limited in this embodiment.

The UE judges the first distance from the UE to the cell reference point of each candidate cell based on its own location information and the location of the cell reference point. At the same time, the network device uses the system information to broadcast the cell radius or the first threshold of each cell. Based on the first distance and the first threshold /cell radius, the UE judges whether it is currently within the coverage of the candidate cell, thereby determining the first candidate cell list. For example, the first candidate cell list includes cell 1, cell 3, cell 4, and Cell 5.

Step 702: Judge whether the number of candidate cells in the first candidate cell list is 1; if yes, proceed to step 703; if not, proceed to step 704.

Step 703: Obtain the target cell.

Step 704: Perform cell selection according to the satellite type information with the second priority to obtain a second candidate cell list.

Further, the UE judges the satellite types corresponding to the four cells in the first candidate cell list based on the system broadcast. For example, the UE currently selects the satellite type of LEO (which can be based on UE implementation or explicit network configuration), cell 1 and cell 4 all belong to cells deployed by LEO, then the UE may further determine the second candidate cell list, and the second candidate cell list includes cell 1 and cell 4.

Step 705: Judge whether the number of candidate cells in the second candidate cell list is 1; if yes, proceed to step 703; if not, proceed to step 706.

Step 706: Perform cell selection according to the cell type information with the third priority to obtain a third candidate cell list.

Further, the UE selects a preferred cell type in the second candidate cell list, for example, the cell type currently to be selected by the UE (which may be based on UE implementation or network display configuration) is a fixed cell type, and the UE may select cell 1 as the third candidate cell list, and cell 1 is the last target cell.

If the network device is also configured with the fourth priority, the UE will not continue to screen at this time, because there is only one remaining candidate cell in the third candidate cell list.

Step 707: Judge whether the number of candidate cells in the third candidate cell list is 1; if yes, proceed to step 703; if not, proceed to step 708.

Step 708: Perform cell selection according to the first information with the fourth priority.

If both cells are mobile cell types when the UE performs the third priority screening, the UE can ignore the third priority cell selection and directly perform the fourth priority cell selection, for example, the fourth priority is based on the cell channel quality, the UE selects cell 1 with better channel quality as the target cell.

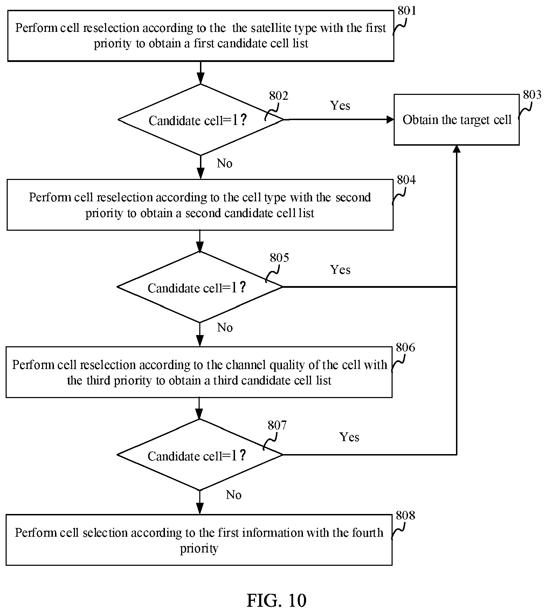

In an example based on FIG. 4, the network device configures the following cell selection criteria and priorities for the terminal:
First priority: Determine the candidate cell (list) based on the satellite type.
Second priority: Determine the candidate cell (list) based on the cell type.
Third priority: Determine the candidate cell (list) based on the channel quality of the cells. As shown in FIG. 10, the terminal performs the following steps:
   Step 801: Determine the first candidate cell list according to the satellite type with the first priority.

The UE determines at least one candidate cell based on the satellite type of the first priority.

The UE judges the satellite types corresponding to the four cells in the first candidate cell list based on the system broadcast. For example, the UE currently wants to select the satellite type of LEO (which can be based on UE implementation or network explicit configuration), cell 1, cell 3, cell 4 and cell 5 both belong to cells deployed by LEO, then the UE determines that the first candidate cell list includes cell 1, cell 3, cell 4, and cell 5.

Step 802: Judge whether the number of candidate cells in the first candidate cell list is 1; if yes, proceed to step 803; if not, proceed to step 804.

Step 803: Obtain the target cell.

Step 804: Perform cell selection according to the cell type with the second priority to obtain a second candidate cell list.

The UE selects a preferred cell type from the second candidate cell list. For example, cell 1 and cell 3 are fixed cell types, cell 4 and cell 5 are mobile cell types, the cell type currently to be selected by the UE (which can be based on UE implementation or network display configuration) is the fixed cell type, and the UE can select cell 1 and cell 3 as the second candidate cell list.

Step 805: Judge whether the number of candidate cells in the second candidate cell list is 1; if yes, go to step 803; if not, go to step 806.

Step 806: Perform cell selection according to the channel quality of the cell with the third priority to obtain a third candidate cell list.

The UE measures the channel quality of cell 1 and cell 3 respectively, and selects cell 1 with better channel quality as the target cell.

If the network device is also configured with the fourth priority, the UE will not continue to screen at this time, because there is only one remaining candidate cell in the third candidate cell list.

Step 807: Judge whether the number of candidate cells in the third candidate cell list is 1; if yes, go to step 803; if not, go to step 808.

Step 808: Perform cell selection according to the first information with the fourth priority.

If the channel quality of the two cells is relatively close when the UE performs the third-priority screening, the UE may ignore the third-priority cell selection and directly perform the fourth-priority cell selection.

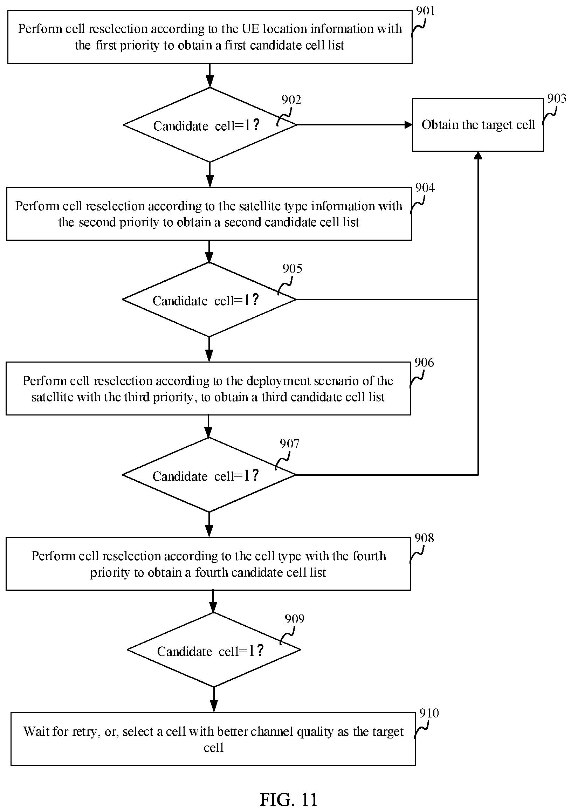

In an example based on FIG. 4, the network device configures the following cell selection criteria and priorities for the terminal:
First priority: Determine the candidate cell (list) based on the UE location information.
Second priority: Determine the candidate cell (list) based on the satellite type.
Third priority: Determine the candidate cell (list) based on the satellite-based deployment scenarios.
Fourth Priority: Determine the candidate cell (list) based on the satellite cell type. As shown in FIG. 11, the terminal performs the following steps:
   Step 901: Determine a first candidate cell list according to the UE location information with the first priority.

UE determines at least one candidate cell based on the location information of the UE with the first priority. Further, the network device uses the system information to broadcast the location of the cell reference point of each cell, that is, the location information of the center of the cell, which may specifically be coordinates, which is not limited in this embodiment.

UE judges the first distance from the UE to the cell reference point of each candidate cell based on its own location information and the location of the cell reference point. At the same time, the network device uses the system information to broadcast the cell radius or the first threshold of each cell. Based on the first distance and the first threshold/cell radius, the UE judges whether it is currently within the coverage of the candidate cell, thereby determining the first candidate cell list. For example, the first candidate cell list includes cell 1, cell 3, and cell 4. Cell 5, cell 7.

Step 902: Judge whether the number of candidate cells in the first candidate cell list is 1; if yes, proceed to step 903; if not, proceed to step 904.

Step 903: Obtain the target cell.

Step 904: Perform cell selection according to the satellite type information with the second priority to obtain a second candidate cell list.

Further, the UE judges the satellite types corresponding to the four cells in the first candidate cell list based on the system broadcast. For example, the UE currently wants to select the satellite type of LEO (which can be based on UE implementation or network explicit configuration), cell 1 and cell 4 and cell 7 both belong to cells deployed by LEO, then the UE may further determine the second candidate cell list, and the second candidate cell list includes cell 1, cell 4, and cell 7.

Step 905: Judge whether the number of candidate cells in the second candidate cell list is 1; if yes, proceed to step 903; if not, proceed to step 906.

Step 906: Perform cell selection according to the deployment scenario of the satellite with the third priority, to obtain a third candidate cell list.

Further, the UE selects a preferred satellite deployment scenario in the second candidate cell list, for example, the UE currently selects a satellite deployment type that is the regenerative payload type, and the UE may select cell 1 and cell 7 as the third candidate cell list.

Step 907: Judge whether the number of candidate cells in the third candidate cell list is 1; if yes, proceed to step 903; if not, proceed to step 908.

Step 908: Perform cell selection according to the cell type with the fourth priority to obtain a fourth candidate cell list.

Further, the LTE selects a preferred cell type in the third candidate cell list. For example, if the cell type currently to be selected by the UE is a fixed type, the UE may select cell 7 as the fourth candidate cell. Cell 7 is the target cell.

Step 909: Judge whether the number of candidate cells in the fourth candidate cell list is 1; if yes, proceed to step 903; if not, proceed to step 910.

Step 910: Wait for retry.

After waiting for a period of time, start from step 901 again. Alternatively, a cell with better channel quality is selected as the target cell.

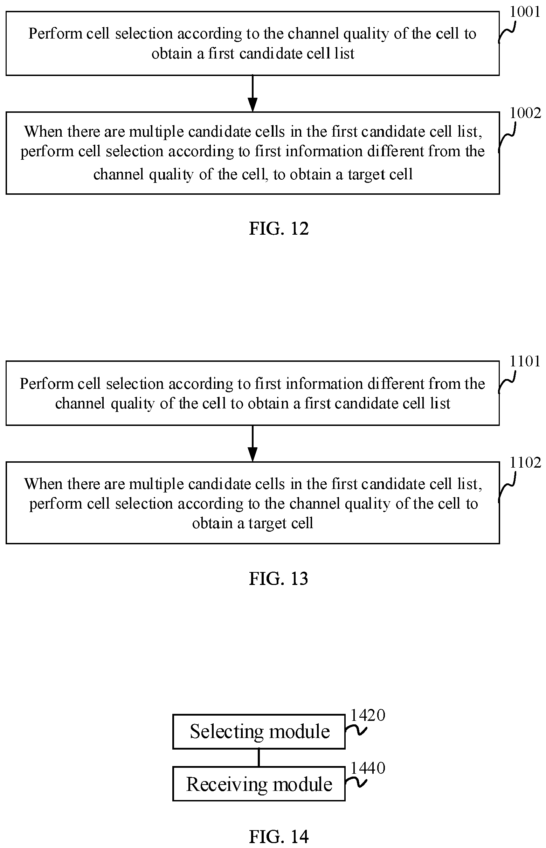

As shown in FIG. 12, it shows a flowchart of a cell selection method provided by an exemplary embodiment of the present application. This embodiment can be executed by a terminal. The method includes the following.

Step 1001: Perform cell selection according to the channel quality of the cell to obtain a first candidate cell list.

Taking the cell reselection scenario as an example, the UE obtains multiple candidate cells based on the channel quality of the cell and the S criterion, that is, the first candidate cell list. After successfully camping on the current cell, the UE will continue to measure the current cell. The RRC layer calculates Srxlev (S criterion) according to the RSRP measurement result, and compares it with Sintrasearch (intra-frequency measurement start threshold) and Snonintrasearch (inter-frequency/inter-system measurement start threshold), as a judgment condition for starting adjacent cell measurement.

Step 1002: When there are multiple candidate cells in the first candidate cell list, perform cell selection according to first information different from the channel quality of the cell, to obtain a target cell.

When there is one candidate cell in the first candidate cell list, the candidate cell is determined as the target cell. When there are multiple candidate cells in the first candidate cell list, the terminal continues to perform cell selection according to at least one of terminal location information, satellite type, satellite deployment scenario, and satellite cell type to obtain the target cell.

In an example, the UE performs cell selection in the first candidate cell list according to the location information of the terminal to obtain the target cell. For example, the candidate cell whose ground reference point is closest to the location information of the terminal is selected and determined as the target cell.

In an example, the UE performs cell selection in the first candidate cell list according to the type of the satellite to obtain the target cell. For example, a candidate cell whose satellite type is LEO is selected and determined as a target cell. For another example, a candidate cell whose satellite type is GEO is selected and determined as the target cell.

In an example, the UE performs cell selection in the first candidate cell list according to the satellite type to obtain a second candidate cell list, and when the second candidate cell list corresponds to a LEO type satellite, performs cell selection according to the satellite cell type, to obtain the target cell. For example, a candidate cell whose cell type is a fixed cell is selected and determined as the target cell. In another example, a candidate cell whose cell type is a mobile cell is selected and determined as the target cell.

In an example, the UE performs cell selection in the first candidate cell list according to the satellite type to obtain the second candidate cell list; and performs cell selection in the second candidate cell list according to the satellite deployment scenario to obtain the target cell. For example, a candidate cell whose deployment scenario is the transparent payload is selected and determined as the target cell. For another example, a candidate cell whose deployment scenario is regenerative payload is selected and determined as a target cell.

To sum up, the method provided in this embodiment selects by preferentially using the channel quality of the cell, and further performs cell selection based on other information other than channel quality when a reasonable serving cell cannot be selected according to the channel quality of the cell. Under the premise of being compatible with relevant communication protocols, a reasonable cell can be selected for the terminal in an NTN scenario.

As shown in FIG. 13, it shows a flowchart of a cell selection method provided by an exemplary embodiment of the present application. This embodiment can be executed by a terminal. The method includes the following.

Step 1101: Perform cell selection according to first information different from the channel quality of the cell to obtain a first candidate cell list.

Taking a cell reselection scenario as an example, the UE performs cell selection based on at least one of the terminal location information, satellite type, satellite deployment scenario, and satellite cell type to obtain the first candidate cell list.

In an example, the UE performs cell selection according to the location information of the terminal to obtain the first candidate cell list. For example, the candidate cell whose ground reference point is closest to the location information of the terminal is selected and determined as the first candidate cell list.

In an example, the UE performs cell selection according to the type of satellite to obtain the first candidate cell list. For example, a candidate cell whose satellite type is LEO is selected and determined as the first candidate cell list. For another example, a candidate cell whose satellite type is GEO is selected and determined as the first candidate cell list.

In an example, the UE performs cell selection according to the satellite type to obtain an initial candidate cell list, and when the initial candidate cell list corresponds to a LEO type satellite, cell selection is performed according to the satellite cell type to obtain the first candidate cell list. For example, a candidate cell whose cell type is a fixed cell is selected and determined as the first candidate cell list. For another example, a candidate cell whose cell type is a mobile cell is selected and determined as the first candidate cell list.

In an example, the UE performs cell selection according to the type of satellite to obtain an initial candidate cell list; and performs cell selection in the initial candidate cell list according to a satellite deployment scenario to obtain the first candidate cell list. For example, a candidate cell whose deployment scenario is the transparent payload is selected and determined as the first candidate cell list. For another example, a candidate cell whose deployment scenario is regenerative payload is selected and determined as the first candidate cell list.

Step 1102: When there are multiple candidate cells in the first candidate cell list, perform cell selection according to the channel quality of the cell to obtain a target cell.

When there is one candidate cell in the first candidate cell list, the candidate cell is determined as the target cell. When there are multiple candidate cells in the first candidate cell list, the terminal determines the cell with the best channel quality as the target cell.

To sum up, in the method provided by this embodiment, the first information different from the channel quality of the cell is preferentially used for cell selection, and when there are multiple candidate cells in the first candidate cell list, the target cell is further selected according to the channel quality of the cell. A reasonable cell can be selected for the terminal in an NTN scenario on the premise of compatibility with related communication protocols.

FIG. 14 shows a block diagram of a cell selection apparatus in an exemplary embodiment of the present application, the apparatus includes the following.
a selecting module 1420, configured to perform cell selection according to first information, wherein the first information includes at least one of following information:
location information of the terminal;
a type of a satellite;
a deployment scenario of the satellite; and
a cell type of the satellite.

In an optional design of this embodiment, the location information of the terminal is determined according to at least one of following second information:
a distance between the terminal and the satellite;
a distance between the terminal and a cell reference point;
GPS location information of the terminal;
a timing advance of the terminal;
a round-trip time between the terminal and the satellite;
a propagation delay between the terminal and the satellite;
a cell where the terminal currently resides;
a synchronization signal block index corresponding to the terminal;
a satellite beam index where the terminal resides; and
a bandwidth part identifier activated by the terminal.

In an optional design of this embodiment, the type of the satellite includes at least one of following types:
LEO satellite;
MEO satellite;
GEO satellite;
UAS platform satellite; and
HEO satellite.

In an optional design of this embodiment, the first information further includes: channel quality of the cell.

In an optional design of this embodiment, the selecting module 1420 is configured to perform cell selection according to the channel quality of the cell to obtain a first candidate cell list; and in a case where the first candidate cell list includes a plurality of candidate cells, perform cell selection according to at least one of the location information of the terminal, the type of a satellite, the deployment scenario of the satellite, and the cell type of the satellite, to obtain a target cell.

In an optional design of this embodiment, the apparatus further includes:
a receiving module 1440, configured to receive a system broadcast, wherein the first information is carried by the system broadcast.

In an optional design of this embodiment, different types of the first information have respective priorities; and
the selecting module 1420 is configured to perform the cell selection preferentially according to the first information with high priority. When the first information with high priority fails to select the target cell, continue to use the first information with the second highest priority to select the cell.

In an optional design of this embodiment, the selecting module 1420 is configured to perform cell selection according to the first information with i-th priority to obtain an i-th candidate cell list; in a case that the i-th candidate cell list does not satisfy a finishing condition, performing cell selection according to the first information with (i+1)-th priority to obtain an (i+1)-th candidate cell list; and obtaining a target cell in a case that the (i+1)-th candidate cell list satisfies the finishing condition,
wherein the i-th priority is higher than the (i+1)-th priority, and the (i+1)-th candidate cell list is a subset of the i-th candidate cell list.

In an optional design of this embodiment, the finishing condition includes:
a number of cells in a current candidate cell list is 1.

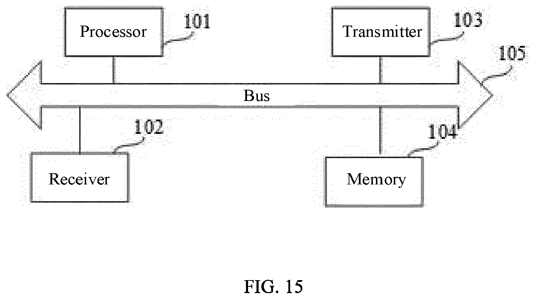

FIG. 15 shows a schematic structural diagram of a communication device (network device or terminal) provided by an exemplary embodiment of the present application. The communication device includes: a processor 101, a receiver 102, a transmitter 103, a memory 104 and a bus 105.

The processor 101 includes one or more processing cores, and the processor 101 executes various functional applications and information processing by running software programs and modules.

The receiver 102 and the transmitter 103 can be implemented as a communication component, which can be a communication chip.

The memory 104 is connected to the processor 101 through the bus 105.

The memory 104 may be used to store at least one instruction, and the processor 101 is used to execute the at least one instruction, so as to implement various steps in the foregoing method embodiments.

In addition, the memory 104 can be implemented by any type of volatile or non-volatile storage device or their combination. The volatile or non-volatile storage device includes but not limited to: magnetic disk or optical disk, electrically erasable programmable read only memory (EEPROM), erasable programmable read only memory (EPROM), static random access memory (SRAM), read only memory (ROM), magnetic memory, flash memory, and programmable read-only memory (PROM).

In an exemplary embodiment, a computer-readable storage medium is also provided, the computer-readable storage medium stores at least one instruction, at least one program, a code set or an instruction set, the at least one instruction, the at least one program, the code set or the instruction set is loaded and executed by a processor to implement the cell selection method performed by the terminal device or the network device provided in the above method embodiments.

Those of ordinary skill in the art can understand that all or part of the steps for implementing the above embodiments can be completed by hardware, and can also be completed by instructing related hardware through a program. The program can be stored in a computer-readable storage medium. The above storage medium may be a read-only memory, a magnetic disk or an optical disk, and the like.

The above are only optional embodiments of the application, and are not intended to limit the application. Any modifications, equivalent replacements, improvements, etc. made within the spirit and principles of the application shall be included in the protection scope of the application.

## Claims

1. A cell selection method, applied to a terminal, the method comprising:
performing cell selection according to first information, where the first information comprises at least one of following information:
location information of the terminal;
a type of a satellite;
a deployment scenario of the satellite; and
a cell type of the satellite.

2. The method according to claim 1, wherein the location information of the terminal is determined according to at least one of following second information:
a distance between the terminal and the satellite;
a distance between the terminal and a cell reference point;
GPS location information of the terminal;
a timing advance (TA) of the terminal;
a round-trip time (RTT) between the terminal and the satellite;
a propagation delay between the terminal and the satellite;
a CELL ID of a cell where the terminal currently resides;
a synchronization signal block index (SSB index) corresponding to the terminal;
a satellite beam index where the terminal resides; and
a bandwidth part identifier (BWP ID) activated by the terminal.

3. The method according to claim 1, wherein the type of the satellite comprises at least one of following types:
low earth orbit (LEO) satellite;
medium earth orbit (MEO) satellite;
geosynchronous orbit (GEO) satellite;
unmanned aerial system (UAS) platform satellite; and
highly elliptical orbit (HEO) satellite.

4. The method according to claim 1, wherein the first information further comprises: channel quality of the cell.

5. The method according to claim 4, wherein the performing cell selection according to the first information comprises:
performing cell selection according to the channel quality of the cell to obtain a first candidate cell list; and
in a case where the first candidate cell list comprises a plurality of candidate cells, performing cell selection according to at least one of the location information of the terminal, the type of a satellite, the deployment scenario of the satellite, and the cell type of the satellite, to obtain a target cell.

6. The method according to any one of claims 1 to 5, wherein before performing cell selection according to first information, further comprises:
receiving a system broadcast, wherein the first information is carried by the system broadcast.

7. The method according to any one of claims 1 to 5, wherein different types of the first information have respective priorities;
the performing cell selection according to first information comprises:
performing the cell selection preferentially according to the first information with high priority.

8. The method according to claim 7, wherein performing the cell selection preferentially according to the first information with high priority, comprising:
performing cell selection according to the first information with i-th priority to obtain an i-th candidate cell list;
in a case that the i-th candidate cell list does not satisfy a finishing condition, performing cell selection according to the first information with (i+1)-th priority to obtain an (i+1)-th candidate cell list; and
obtaining a target cell in a case that the (i+1)-th candidate cell list satisfies the finishing condition,
wherein the i-th priority is higher than the (i+1)-th priority, and the (i+1)-th candidate cell list is a subset of the i-th candidate cell list.

9. The method according to claim 8, wherein the finishing condition comprises:
a number of cells in a current candidate cell list is 1.

10. A cell selection apparatus, applied to a terminal, and the apparatus comprising:
a selecting module, configured to perform cell selection according to first information, wherein the first information comprises at least one of following information:
location information of the terminal;
a type of a satellite;
a deployment scenario of the satellite; and
a cell type of the satellite.

11. The apparatus according to claim 10, wherein the location information of the terminal is determined according to at least one of following second information:
a distance between the terminal and the satellite;
a distance between the terminal and a cell reference point;
GPS location information of the terminal;
a timing advance (TA) of the terminal;
a round-trip time (RTT) between the terminal and the satellite;
a propagation delay between the terminal and the satellite;
a CELL ID of a cell where the terminal currently resides;
a synchronization signal block index (SSB index) corresponding to the terminal;
a satellite beam index where the terminal resides; and
a bandwidth part identifier (BWP ID) activated by the terminal.

12. The apparatus according to claim 10, wherein the type of the satellite comprises at least one of following types:
low earth orbit (LEO) satellite;
medium earth orbit (MEO) satellite;
geosynchronous orbit (GEO) satellite;
unmanned aerial system (UAS) platform satellite; and
highly elliptical orbit (HEO) satellite.

13. The apparatus according to claim 10, wherein the first information further comprises: channel quality of the cell.

14. The apparatus according to claim 13, wherein the selecting module is configured to perform cell selection according to the channel quality of the cell to obtain a first candidate cell list; and in a case where the first candidate cell list comprises a plurality of candidate cells, perform cell selection according to at least one of the location information of the terminal, the type of a satellite, the deployment scenario of the satellite, and the cell type of the satellite, to obtain a target cell.

15. The apparatus according to any one of claims 10 to 14, further comprising:
a receiving module, configured to receive a system broadcast, wherein the first information is carried by the system broadcast.

16. The apparatus according to any one of claims 10 to 14, wherein different types of the first information have respective priorities; and
the selecting module is configured to perform the cell selection preferentially according to the first information with high priority.

17. The apparatus according to claim 16, wherein
the selecting module is configured to perform cell selection according to the first information with i-th priority to obtain an i-th candidate cell list; in a case that the i-th candidate cell list does not satisfy a finishing condition, performing cell selection according to the first information with (i+1)-th priority to obtain an (i+1)-th candidate cell list; and obtaining a target cell in a case that the (i+1)-th candidate cell list satisfies the finishing condition,
wherein the i-th priority is higher than the (i+1)-th priority, and the (i+1)-th candidate cell list is a subset of the i-th candidate cell list.

18. The apparatus according to claim 17, wherein the finishing condition comprises:
a number of cells in a current candidate cell list is 1.

19. A terminal, comprising:
a processor;
a transceiver connected to the processor; and
a memory for storing executable instructions of the processor;
wherein the processor is configured to load and execute the executable instructions to implement the cell selection method according to any one of claims 1 to 9.

20. A computer-readable storage medium, wherein executable instructions are stored in the readable storage medium, and the executable instructions are loaded and executed by a processor to implement the cell selection method according to any one of claims 1 to 9.
